# EUROPEAN PATENT SPECIFICATION

(11) **EP 4 024 098 B1**
(45) Date of publication and mention of the grant of the patent: **11.01.2023**
(21) Application number: 20217595.6
(22) Date of filing: 29.12.2020
(51) Int. Cl.: G02B 5/30, H01Q 15/24

(54) **A POLARIZER FOR ELECTROMAGNETIC RADIATION**
POLARISATOR FÜR ELEKTROMAGNETISCHE STRAHLUNG
POLARISEUR POUR RAYONNEMENT ÉLECTROMAGNÉTIQUE

(43) Date of publication of application: 06.07.2022
(73) Proprietor: INL - International Iberian Nanotechnology Laboratory, 4715-330 Braga (PT)
(72) Inventor: CHíCHARO, José Alexandre de Nóbrega, 4715-330 Braga (PT); BORME, Jérôme Gilles Ollivier, 4715-330 Braga (PT); ALPUIM, João Pedro Santos Hall Agorreta, 4715-330 Braga (PT)
(74) Representative: AWA Sweden AB

(56) References cited:
- JP-A- 2012 123 046
- US-A1- 2005 088 739
- LU BIN ET AL: "A high extinction ratio THz polarizer fabricated by double-bilayer wire grid structure", AIP ADVANCES, AMERICAN INSTITUTE OF PHYSICS, 2 HUNTINGTON QUADRANGLE, MELVILLE, NY 11747, vol. 6, no. 2, 18 February 2016 (2016-02-18), XP012205163, DOI: 10.1063/1.4942515 [retrieved on 1901-01-01]
- FERRARO A. ET AL: "Flexible terahertz wire grid polarizer with high extinction ratio and low loss", OPTICS LETTERS, vol. 41, no. 9, 1 May 2016 (2016-05-01), page 2009, XP055810938, US ISSN: 0146-9592, DOI: 10.1364/OL.41.002009 Retrieved from the Internet: URL:https://www.osapublishing.org/DirectPD FAccess/E0C17123-736F-4DBA-B77156FAD504776 E_340121/ol-41-9-2009.pdf?da=1&id=340121&s eq=0&mobile=no>
- YANG CHAN-SHAN ET AL: "Broadband terahertz conductivity and optical transmission of indium-tin-oxide (ITO) nanomaterials", OPTICS EXPRESS, vol. 21, no. 14, 3 July 2013 (2013-07-03), page 16670, XP055810919, DOI: 10.1364/OE.21.016670 Retrieved from the Internet: URL:https://www.osapublishing.org/DirectPD FAccess/77202DD3-8501-4892-927EB2E8678D370 A_258539/oe-21-14-16670.pdf?da=1&id=258539 &seq=0&mobile=no>
- AREZOOMANDAN SARA ET AL: "THz characterization and demonstration of visible-transparent/terahertz-functional electromagnetic structures in ultra-conductive La-doped BaSnO3 Films", SCIENTIFIC REPORTS, vol. 8, no. 1, 23 February 2018 (2018-02-23), XP055810909, DOI: 10.1038/s41598-018-22038-w Retrieved from the Internet: URL:http://www.nature.com/articles/s41598- 018-22038-w.pdf>

## Description

### Technical field

The present inventive concept relates to a polarizer for electromagnetic radiation having a frequency within a range from 0.1 to 25 THz.

### Background of the invention

Infrared (IR), and in particular terahertz (THz), region is often described as the final unexplored area of the electromagnetic (EM) spectrum. Main applications of this technology include imaging, spectroscopy, detection of chemicals and explosives, security screening, broadband wireless data communication, etc. Therefore, effort has been put into development of components for the THz spectral range. Examples of such components include lenses, filters, attenuators, and polarizers. In particular, polarizers are important tools for many applications, for example in spectroscopy. Polarizers are components which are designed to transmit a specific polarization component of EM radiation to block (via, e.g., absorption or reflection) EM radiation of a polarization component orthogonal to that specific polarization component. A common figure of merit for polarizers is the polarization extinction ratio (ER), which is a ratio between the intensities for these two orthogonal polarization components of EM radiation transmitted through the polarizer. Put differently, the ER is a measure of how well the polarizer is able to transmit polarized EM radiation.

However, current polarizers designed for EM radiation within the THz spectral range are typically associated with limited polarization efficiency, such as a limited ER. Thus, there is a need for an improved polarizer for EM radiation within the THz spectral range.

Bin Lu et al *"A high extinction ratio THz polarizer fabricated by a double-bilayer wire grid structure",* describing a polarizer with double-bilayer wire grid structure, created by manufacturing wire grid on two sides of the silicon substrate.

Ferraro, A et al. *"Flexible terahertz wire grid polarizer with high extinction ratio and low loss"* describes experimental wire grid polarizer created using a thin flexible foil of polymer material, specifically cyclo-olefin polymer.

Yang, Chan-Shan et al. *"Broadband terahertz conductivity and optical transmission of indium-tin-oxide (ITO) nanomaterials"* describes the way nanorods and nanowhiskers, manufactured of Indium-tin-oxide (ITO) respond to electromagnetic radiation of THz, and their electrical and optical properties when submitted to that kind of radiation.

Arezoomandan, Sara Et al. *"THz characterization and demonstration of visible-transperantlterahertz-functional electromagnetic structures in ultraconductive La-dope BaSnO₃"* describing the electrical conductivity and wide bandgap of La-doped BaSnO thin-films when subjugated to THz electromagnetic radiation.

### Summary of the invention

It is an object to, at least, partly, mitigate, alleviate, or eliminate one or more of the above-identified deficiencies in the art and disadvantages singly or in any combination and solve at least the above-mentioned problem.

It is a further object of the present inventive concept to provide a polarizer with improved properties, in particular an improved extinction ratio for electromagnetic radiation having a frequency within a range from 0.1 to 25 THz.

According to a first aspect a polarizer for electromagnetic radiation having a frequency within a range from 0.1 to 25 THz is provided. The polarizer comprising: a substrate comprising a cyclic olefin polymer (COP) and/or a cyclic olefin copolymer (COC), wherein a plurality of trenches is formed on an area of a first major surface of the substrate, the trenches extending in parallel along the first major surface; and an electrically conductive layer covering at least a portion of the area of the first major surface, wherein the electrically conductive layer is a discontinuous layer covering a bottom surface of a trench and a top surface connecting two consecutive trenches. Put differently, the discontinuous electrically conductive layer does not cover sidewall surfaces of the trenches.

It has been found that the combination a discontinuous electrically conductive layer on a substrate comprising cyclic olefin polymer (COP) and/or cyclic olefin copolymer (COC) results in a polarizer having an improved ER.

A further possible associated advantage of using a substrate comprising COP and/or COC is that the substrate may be more flexible and may therefore be incorporated on curved surfaces. For example, the polarizer may be incorporated on a surface of a curved optical element.

The electrically conductive layer may be a metal layer.

A possible associated advantage is that the metal layer may allow for an improved electric conduction, thereby allowing for a polarizer with an improved ER.

The metal layer may comprise one or more of gold, silver, aluminum, and copper.

The metal layer may comprise gold.

A possible associated advantage is that gold may allow for a more long-term chemically stable metal layer.

A further possible associated advantage is that gold may, due to its high complex refractive index for EM radiation within the THz spectral range, allow for an improved absorption/reflection of EM radiation having a polarization parallel to the trenches, thereby allowing for an improved polarization efficiency of the polarizer.

The electrically conductive layer may comprise indium tin oxide.

A depth of a trench may be within a range from 0.2 µm to 10 µm.

A possible associated advantage is that trenches with depths within this range may improve an ER of the polarizer. In particular, it has been found that the ER of the polarizer increases with increasing depth of the trenches.

A width of a trench may be within a range from 0.05 µm to 5 µm.

A possible associated advantage is that trenches with widths within this range may improve an ER of the polarizer.

A pitch of the plurality of trenches may be within a range from 0.1 µm to 5 µm.

A possible associated advantage is that a pitch of the plurality trenches within this range may improve an ER of the polarizer.

A thickness of the electrically conductive layer may be within a range from 0.05 µm to 0.5 µm.

A possible associated advantage is that an electrically conductive layer with a thickness within this range may improve an ER of the polarizer. In particular, a thickness of the electrically conductive layer within a range from 0.4 µm to 0.5 µm is found to improve the ER of the polarizer.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular component parts of the systems described as such system may vary. It is also to be understood that the terminology used herein is for purpose of describing particular variants only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements.

### Brief description of the drawings

The above and other aspects of the present inventive concept will now be described in more detail, with reference to appended drawings showing variants of the inventive concept. The figures should not be considered limiting the inventive concept to the specific variant; instead they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates a side view of a polarizer according to the present inventive concept.
Figure 2 illustrates a top view of the polarizer in Fig. 1.
Figure 3A-C illustrates comparisons of simulation results for different polarizer configurations.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

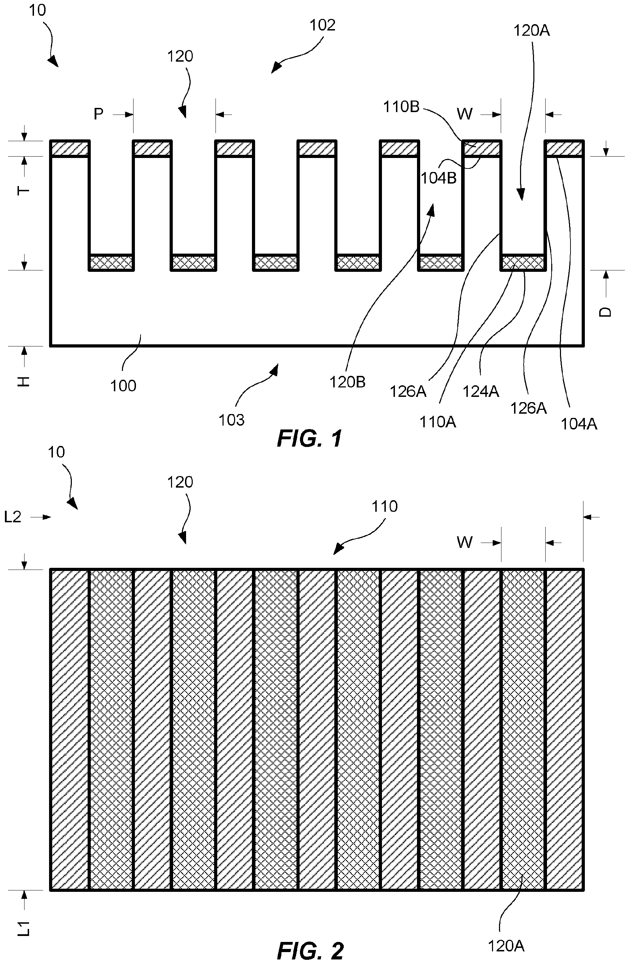

A polarizer 10 according to the present inventive concept will now be described with reference to Fig. 1 and Fig. 2. Figure 1 illustrates a side view of a polarizer 10 for electromagnetic (EM) radiation having a frequency within a range from 0.1 to 25 THz. Figure 2 illustrates a top view of the polarizer 10 of Fig. 1. As seen in Fig. 1, the polarizer 10 comprises a substrate 100. The substrate 100 comprises a cyclic olefin polymer (COP) and/or a cyclic olefin copolymer (COC). The substrate 100 may alternatively, or additionally, comprise one or more of high-density polyethylene (HDPE), polymethylpentene (TPX), low-density polyethylene (LDPE), polystyrene (PS), polytetrafluoroethylene (Teflon), and Parylene-N. As is illustrated in the example of Fig. 2, the polarizer 10 has a first extension L1 in a first direction, and a second extension L2 in a second direction perpendicular to the first direction. The first extension L1 and the second extension L2 may be adapted to an intended application of the polarizer 10. For example, one or both of the first extension L1 and the second extension L2 may be within a range from 10 mm to 30 mm. However, it is to be understood that the first extension L1 and/or the second extension L2 may be within other ranges depending on the intended application of the polarizer 10.

The substrate 100 has a plurality 120 of trenches formed on an area of a first major surface 102 of the substrate 100. The area may be a portion of the first major surface 102 of the substrate 100. The plurality 120 of trenches may be two or more trenches. As is illustrated in Fig. 2, the trenches extend in parallel along the first major surface 102 of the substrate 100. A pitch P of the plurality 120 of trenches may be within a range from 0.1 µm to 5 µm. A depth D of a trench 120A may be within a range from 0.2 µm to 10 µm. The depth D of a trench 120A may be a distance from a top surface 104B of the substrate 100 connecting two consecutive trenches 120A, 120B to a bottom surface 124A of the trench 120A. The distance from the top surface 104B to the bottom surface 124A may be parallel to a normal of the bottom surface 124A of the trench 120A. A width W of a trench 120A may be within a range from 0.05 µm to 5 µm. The width W may be a distance between two sidewall surfaces 126A of the trench 120A. It is to be understood that the width W of a trench 120A may vary over the depth D. However, the width W may preferably be constant, or substantially constant, over the depth D of a trench 120A. Put differently, the sidewall surfaces 126A of a trench 120A may preferably be parallel planar surfaces, however it is to be understood that the sidewall surfaces 126A of the trench 120A may be non-parallel and/or non-planar. For example, one or both of the sidewall surfaces 126A of the trench 120A may be structured. The depth D of a trench 120A may vary over the width W of a trench 120A. However, the depth D may preferably be constant, or substantially constant, over the width W of a trench 120A. Put differently, a bottom surface 124A of a trench 120A may preferably be a planar surface, however it is to be understood that the bottom surface 124A of the trench 120A may be non-planar and/or structured. The substrate 100 may, as illustrated in the example of Fig. 1, a thickness H. The thickness H may be adapted such that the polarizer 10 is suitable for an intended application of the polarizer 10. The thickness H may, e.g., be within a range from 30 µm to 300 µm.

The polarizer 10 further comprises an electrically conductive layer 110 covering at least a portion of the area of the first major surface 102. A thickness T of the electrically conductive layer 110 may be within a range from 0.05 µm to 0.5 µm. The thickness T may preferably be constant or substantially constant over the extension of the electrically conductive layer 110. However, it is to be understood that the thickness T may vary over the extension of the electrically conductive layer 110. The electrically conductive layer 110 may be a metal layer. The metal layer may comprise one or more of gold, silver, aluminum, and copper. A metal layer comprising gold may in particular allow for a more long-term chemically stable metal layer. Further, a metal layer comprising gold may, due to gold's high complex refractive index for EM radiation within the THz spectral range, allow for an improved absorption/reflection of EM radiation having a polarization parallel to the trenches, thereby allowing for an improved polarization efficiency of the polarizer 10. The electrically conductive layer 110 may comprise indium tin oxide.

As is illustrated in Fig. 1, the electrically conductive layer 110 is a discontinuous layer covering a bottom surface 124A of a trench 120A and the top surface 104B connecting two consecutive trenches 120A, 120B. As is illustrated in Fig. 1, the discontinuous layer may cover a top surface 104A connecting a trench 120A and an outer side of the polarizer 10. Put differently, the discontinuous layer does not cover the sidewall surfaces 126A of a trench 120A. Hence, a first portion 110B of the discontinuous electrically conductive layer 110 covers the top surfaces 104B connecting consecutive trenches 120A, 120B, and a second portion 110A of the discontinuous electrically conductive layer 110 covers the bottom surfaces of the trenches. Thus, the first portion 110B of the discontinuous electrically conductive layer 110 may be referred to as a top portion, and the second portion 110A of the discontinuous electrically conductive layer 110 may be referred to as a bottom portion. Even though not explicitly indicated in Fig. 1, the top portion and the bottom portion may have similar thicknesses T. Preferably, the thickness T of the top portion may be the same as the thickness T of the bottom portion.

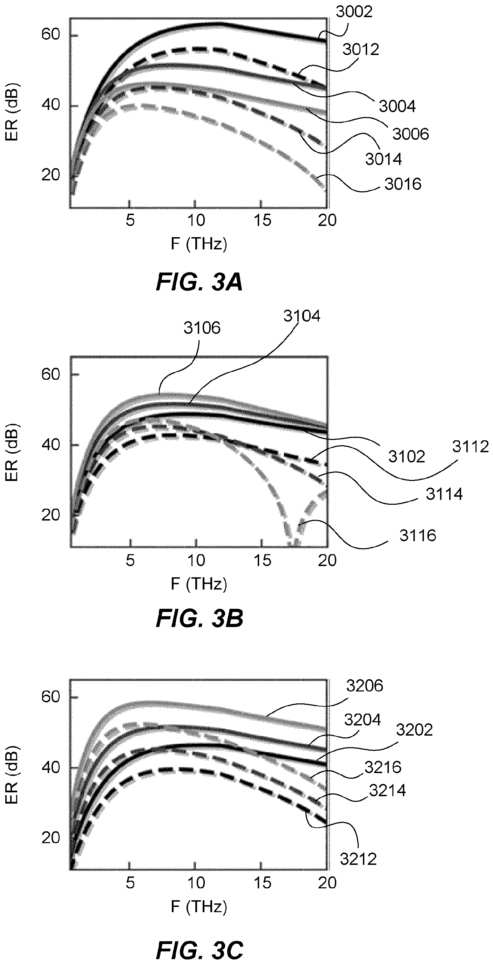

Hence, the polarizer 10 may be similar to a double-layer wire grid polarizer (DWGP). As is further seen in the illustrations of Fig. 1 and Fig. 2, the top portion of the electrically conductive layer 110 is shifted/translated with respect to the bottom portion of the electrically conductive layer 110. It has been found that the combination a discontinuous electrically conductive layer 110 on a substrate 100 comprising COP and/or COC results in a polarizer 10 having an improved ER. The improved ER of the polarizer 10 will be explained with reference to Fig. 3.

Figure 3 illustrates results from simulations comparing different polarizer configurations. In Fig. 3A-C, the vertical axes represent polarization extinction ratio ER, and the horizontal axes represent frequency F. Each simulated polarizer is similar to a DWGP as discussed previously. In Fig. 3A-C, the solid lines 3002, 3004, 3006, 3102, 3104, 3106, 3202, 3204, 3206 represent a polarizer with a substrate comprising COC, and the dashed lines 3012, 3014, 3016, 3112, 3114, 3116, 3212, 3214, 3216 represent a polarizer with a substrate comprising doped silicon. For all the simulated polarizers, the electrically conductive layer comprises gold. The simulations were performed using refractive indexes of 3.5 for the doped silicon and 1.4 for COC. Hence, the solid lines in Fig. 3 represents results for a polarizer according to the present inventive concept. For all simulated polarizers, the fill factor for the plurality of trenches is 0.5. Put differently, for a simulated polarizer having a pitch P of 2 µm, the width W of each trench is set to 1 µm and the width of ridges connecting consecutive trenches is set to 1 µm. It is, however, to be understood that other fill factors may be used, i.e. that the width W of the trenches may be different than the width of ridges connecting consecutive trenches. For instance, it has been found in simulations that widths W within a range from 0.05 µm to 5 µm are suitable for the polarizer 10 according to the present inventive concept.

In each of Fig. 3A-C, the ER is shown in dB, and is determined as ER = 10log(TM/TE), where TM is an intensity of a portion of transmitted EM radiation which has an electric field perpendicular to the plurality of trenches, and TE is an intensity of a portion of transmitted EM radiation which has an electric field parallel to the plurality of trenches. Put differently, TM is the intensity of a polarization component of the transmitted EM radiation that the polarizer is designed to transmit and TE is the intensity of a polarization component of the transmitted EM radiation that the polarizer is designed to block.

In Fig. 3A, the depth D of the trenches are kept constant at 2 µm and the thickness T is kept constant at 0.1 µm, while the pitch P is set to three values: 1 µm, 2 µm, and 3 µm. In Fig. 3A, two lines 3002, 3012 represent results for pitch P being 1 µm, two lines 3004, 3014 represent results for pitch P being 2 µm, and two lines 3006, 3016 represent results for pitch P being 3 µm. As is seen in Fig. 3A, compared to a polarizer comprising a doped silicon substrate, the polarizer 10 according to the present inventive concept has a higher ER for each pitch P over the entire simulated frequency range. The simulations further showed that, for pitches P within a range from 0.1 µm to 5 µm, a smaller pitch P results in a higher ER for polarizers according to the present inventive concept.

In Fig. 3B, the pitch P is kept constant at 2 µm and the thickness T is kept constant at 0.1 µm, while the depth D is set to three values: 1 µm, 2 µm, and 3 µm. In Fig. 3B, two lines 3102, 3112 represent results for depth D being 1 µm, two lines 3104, 3114 represent results for depth D being 2 µm, and two lines 3106, 3116 represent results for depth D being 3 µm. As is seen in Fig. 3B, compared to a polarizer comprising a doped silicon substrate, the polarizer 10 according to the present inventive concept has a higher ER for each depth D over the entire simulated frequency range. The simulations further showed that, for depths D within a range from 0.2 µm to 10 µm, a higher depth D results in a higher ER for polarizers according to the present inventive concept.

In Fig. 3C, the pitch P is kept constant at 2 µm and the depth D is kept constant at 2 µm, while the thickness T of the electrically conductive layer is set to three values: 0.05 µm, 0.1 µm, and 0.2 µm. In Fig. 3C, two lines 3202, 3212 represent results for thickness T being 0.05 µm, two lines 3204, 3214 represent results for thickness T being 0.1 µm, and two lines 3206, 3216 represent results for thickness T being 0.2 µm. As is seen in Fig. 3C, compared to a polarizer comprising a doped silicon substrate, the polarizer 10 according to the present inventive concept has a higher ER for each thickness T over the entire simulated frequency range. The simulations further showed that, for thicknesses T within a range from 0.05 µm to 0.5 µm, a larger thickness T results in a higher ER for polarizers according to the present inventive concept.

Thus, compared to a polarizer comprising a doped silicon substrate, the polarizer 10 according to the present inventive concept has, in general, a higher ER over the entire simulated frequency range.

Polarizers similar to the polarizer 10 illustrated in Fig. 1 and Fig. 2 have further been fabricated with two substrate materials, doped silicon and COC. Two COC polarizers having different depths D of the trenches were manufactured. For all types of the polarizers, the manufacturing process starts by Direct Write Laser (DWL) patterning a grating over a silicon substrate and then the pattern is transferred to silicon by a dry etch process on an inductively coupled plasma reactive ion etching (ICP - RIE) tool (Pegasus from SPTS) using a SF6/C4F8 plasma. The resist mask was striped with an oxygen plasma asher (PVA GIGAbatch 360 M from Tepla). To complete fabrication of the silicon DWGP, silicon dies are diced with alignment marks (Disco DAD 3500). The alignment marks are used in order to have good alignment in a system for characterization of the polarizers (Fourier Transform Infrared Spectroscopy, FTIR, system). A 100 nm modified gold layer is deposited using a confocal sputtering tool (Kenosistec Sputtering). In the fabrication process of COC DWGP, the silicon wafer was first patterned, and resist was striped as described above. Silicon molds were treated with an anti-sticking solution before contact with a polymer in a nanoimprint system (Obducat Eitre 8). The patterned COC sheet was removed at a temperature of 50 °C after a soft lithography process. The sheet was diced through alignment marks imprinted in the materials before following a gold deposition similar to the silicon substrate described above. The silicon polarizer was fabricated from doped silicon with a pitch P of 2 µm, and a depth D of 2 µm. The COC polarizers were fabricated with a pitch P of 2 µm and 3 µm and depth D of 3 µm. All polarizers had an electrically conductive layer with a thickness T of 0.1 µm and comprising gold.

The fabricated polarizers were investigated using an FTIR system. In particular, the ER for each polarizer was determined. Results of the investigations of the fabricated polarizers were similar to that of the simulations, i.e. the results presented in Fig. 3A-C. Hence, the fabricated polarizers according to the present inventive concept have, generally, a higher ER than a polarizer comprising a doped silicon substrate.

The person skilled in the art realizes that the present inventive concept by no means is limited to the preferred variants described above. On the contrary, many modifications and variations are possible within the scope of the appended claims.

For example, the polarizer 10 discussed in connection with Fig. 1 and Fig. 2 comprises a plurality of trenches formed on the first major surface 102 of the substrate 100. However, it is envisioned that a further plurality of trenches may be formed on a second major surface 103 of the substrate 100. The second major surface 103 may be an opposite surface to the first major surface 102 of the substrate 100. Thereby, the polarizer 10 may, effectively, comprise an additional polarizing structure (i.e. the further plurality of trenches) that may enhance the ER of the polarizer 10 even further.

In a further example, the polarizer 10 is illustrated in Fig. 2 as having a rectangular shape. However, it is to be understood that other shapes may be possible, e.g., elliptical.

Additionally, variations to the disclosed variants can be understood and effected by the skilled person in practicing the claimed invention, from a study of the drawings, the disclosure, and the appended claims.

## Claims

1. A polarizer (10) for electromagnetic radiation having a frequency within a range from 0.1 to 25 THz, the polarizer (10) comprising:
a substrate (100), wherein a plurality (120) of trenches is formed on an area of a first major surface (102) of the substrate (100), the trenches (120) extending in parallel along the first major surface (102); and
an electrically conductive layer (110) covering at least a portion of the area of the first major surface (102), wherein the electrically conductive layer (110) is a discontinuous layer covering a bottom surface (124a) of a trench (120a) and a top surface (104b) connecting two consecutive trenches (120a, 120b)
**characterized in that**:
the substrate (100) comprises a cyclic olefin polymer and/or a cyclic olefin copolymer.

2. The polarizer (10) according to claim 1, where in the electrically conductive layer (110) is a metal layer.

3. The polarizer (10) according to claim 2, wherein the metal layer comprises one or more of gold, silver, aluminum, and copper.

4. The polarizer (10) according to claim 3, wherein the metal layer comprises gold.

5. The polarizer (10) according to claim 1, wherein the electrically conductive layer (110) comprises indium tin oxide.

6. The polarizer (10) according to any preceding claim, wherein a depth (D) of a trench (120a) is within a range from 0.2 µm to 10 µm.

7. The polarizer (10) according to any preceding claim, wherein a width (W) of a trench (120a) is within a range from 0.05 µm to 5 µm.

8. The polarizer (10) according to any preceding claim, wherein a pitch (P) of the plurality (120) of trenches is within a range from 0.1 µm to 5 µm.

9. The polarizer (10) according to any preceding claim, wherein a thickness (T) of the electrically conductive layer (110) is within a range from 0.05 µm to 0.5 µm.

## Patentansprüche

1. Polarisator (10) für elektromagnetische Strahlung mit einer Frequenz innerhalb eines Bereichs von 0,1 bis 25 THz, wobei der Polarisator (10) umfasst:
ein Substrat (100), wobei mehrere Gräben (120) auf einem Bereich einer ersten Hauptfläche (102) des Substrats (100) gebildet sind, wobei sich die Gräben (120) parallel entlang der ersten Hauptfläche (102) erstrecken; und
eine elektrisch leitende Schicht (110), die mindestens einen Abschnitt des Bereichs der ersten Hauptfläche (102) abdeckt, wobei die elektrisch leitende Schicht (110) eine diskontinuierliche Schicht ist, die eine untere Fläche (124a) eines Grabens (120a) und eine obere Fläche (104b), die zwei aufeinanderfolgende Gräben (120a, 120b) verbindet, abdeckt,
**dadurch gekennzeichnet, dass**:
das Substrat (100) ein cyclisches Olefinpolymer und/oder ein cyclisches Olefincopolymer umfasst.

2. Polarisator (10) nach Anspruch 1, wobei sich in der elektrisch leitenden Schicht (110) eine Metallschicht befindet.

3. Polarisator (10) nach Anspruch 2, wobei die Metallschicht eines oder mehrere von Gold, Silber, Aluminium und Kupfer umfasst.

4. Polarisator (10) nach Anspruch 3, wobei die Metallschicht Gold umfasst.

5. Polarisator (10) nach Anspruch 1, wobei die elektrisch leitende Schicht (110) Indiumzinnoxid umfasst.

6. Polarisator (10) nach einem der vorstehenden Ansprüche, wobei eine Tiefe (D) eines Grabens (120a) in einem Bereich von 0,2 µm bis 10 µm liegt.

7. Polarisator (10) nach einem der vorstehenden Ansprüche, wobei eine Breite (W) eines Grabens (120a) in einem Bereich von 0,05 µm bis 5 µm liegt.

8. Polarisator (10) nach einem der vorstehenden Ansprüche, wobei eine Teilung (P) der mehreren Gräben (120) in einem Bereich von 0,1 µm bis 5 µm liegt.

9. Polarisator (10) nach einem der vorstehenden Ansprüche, wobei die Dicke (T) der elektrisch leitenden Schicht (110) in einem Bereich von 0,05 µm bis 0,5 µm liegt.

## Revendications

1. Polariseur (10) pour un rayonnement électromagnétique ayant une fréquence comprise dans une plage de 0,1 à 25 THz, le polariseur (10) comprenant :
un substrat (100), dans lequel une pluralité (120) de tranchées est formée sur un périmètre d'une première grande surface (102) du substrat (100), les tranchées (120) s'étendant parallèlement le long de la première grande surface (102) ; et
une couche électriquement conductrice (110) recouvrant au moins une partie de la surface de la première surface principale (102), dans laquelle la couche électriquement conductrice (110) est une couche discontinue recouvrant une surface inférieure (124a) d'une tranchée (120a) et une surface supérieure (104b) reliant deux tranchées consécutives (120a, 120b) **caractérisé en ce que** :
le substrat (100) comprend un polymère d'oléfine cyclique et/ou un copolymère d'oléfine cyclique.

2. Polariseur (10) selon la revendication 1, dans lequel la couche électriquement conductrice (110) est une couche métallique.

3. Polariseur (10) selon la revendication 2, dans lequel la couche métallique comprend un ou plusieurs parmi l'or, l'argent, l'aluminium et le cuivre.

4. Polariseur (10) selon la revendication 3, dans lequel la couche métallique comprend de l'or.

5. Polariseur (10) selon la revendication 1, dans lequel la couche électriquement conductrice (110) comprend de l'oxyde d'indium et d'étain.

6. Polariseur (10) selon une quelconque des revendications précédentes, dans lequel une profondeur (D) d'une tranchée (120a) est comprise dans une plage de 0,2 µm à 10 µm.

7. Polariseur (10) selon une quelconque des revendications précédentes, dans lequel une largeur (W) d'une tranchée (120a) est comprise dans une plage de 0,05 µm à 5 µm.

8. Polariseur (10) selon une quelconque des revendications précédentes, dans lequel un pas (P) de la pluralité (120) de tranchées est comprise dans une plage de 0,1 µm à 5 µm.

9. Polariseur (10) selon une quelconque des revendications précédentes, dans lequel une épaisseur (T) de la couche électriquement conductrice (110) est comprise dans une plage de 0,05 µm à 0,5 µm.
